(19)

Europäisches Patentamt

European Patent Office

Office européen des brevets

(11) **EP 4 513 480 A1**

(12) **EUROPEAN PATENT APPLICATION**
published in accordance with Art. 153(4) EPC

(43) Date of publication:
26.02.2025 Bulletin 2025/09

(21) Application number: 23917051.7

(22) Date of filing: 12.09.2023

(51) International Patent Classification (IPC):
*G10L 15/06* (2013.01)

(86) International application number:
PCT/CN2023/118244

(87) International publication number:
WO 2024/152583 (25.07.2024 Gazette 2024/30)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 16.01.2023 CN 202310110811

(71) Applicants:
• Zhejiang Lab
Hangzhou, Zheijiang 311121 (CN)
• Zhejiang University
Hangzhou, Zhejiang 310058 (CN)

(72) Inventors:
• YUAN, Mengwen
Hangzhou, Zhejiang 311121 (CN)
• ZHANG, Yuhao
Hangzhou, Zhejiang 311121 (CN)
• TANG, Huajin
Hangzhou, Zhejiang 311121 (CN)
• PAN, Gang
Hangzhou, Zhejiang 311121 (CN)

(74) Representative: karo IP
Patentanwälte PartG mbB
Steinstraße 16-18
40212 Düsseldorf (DE)

(54) **HARDWARE-ORIENTED DEEP SPIKING NEURAL NETWORK SPEECH RECOGNITION METHOD AND SYSTEM**

(57) The invention discloses a hardware-oriented deep pulse neural network voice recognition method and system, and the method comprises the steps: obtaining an open-source speech data set; preprocessing the voice data set, obtaining low-dimensional voice features from high-dimensional voice data, and encoding the low-dimensional voice features into a pulse sequence; constructing a deep pulse neural network model, wherein each neuron in the model adopts a hardware-friendly integrated ignition model; constructing a loss function, updating a network weight by adopting a gradient-substituted space-time back propagation algorithm, training the deep pulse neural network model on the training data set, and storing the updated network weight; and quantizing the floating-point weight into a fixed-point weight, loading the quantized fixed-point weight by the deep pulse neural network model, and identifying the test data set to obtain a predicted classification label so as to realize speech recognition of the hardware-oriented deep pulse neural network model. The invention also comprises a hardware-oriented deep pulse neural network speech recognition system. According to the invention, the recognition power consumption is reduced, and the approximate recognition accuracy is maintained.

Obtain an open-source voice dataset and divide it into training and testing datasets

↓

Preprocess the voice dataset, extract low dimensional voice features from high-dimensional voice data, and encode them into pulse sequences

↓

Build a deep pulse neural network model, in which each neuron adopts a hardware friendly integrated ignition model

↓

Construct a loss function, optimize the network weight by adopting a space-time anti-transmission algorithm, train the deep pulse neural network model on the training data set, and store the updated network weight

↓

Quantify floating-point weights into fixed-point weights, load the quantized fixed-point weights into the deep pulse neural network model, recognize the test dataset, obtain predicted classification labels, and implement hardware oriented deep pulse neural network model for voice recognition

FIG. 1

EP 4 513 480 A1

EP 4 513 480 A1

**Description**

TECHNICAL FIELD

The present invention belongs to the technical field of voice recognition and neuromorphic computing, and relates to a hardware-oriented deep pulse neural network voice recognition method and system.

BACKGROUND

As a "third generation neural network", the spiking neural network simulates the working mechanism of human cranial neurons, and transmits information in the form of pulses. When a neuron receives a pulse, the film potential is accumulated, and when the accumulated film potential reaches a threshold, the neuron is activated to issue a pulse and is transferred to the next layer. If the film potential has not reached the threshold, the neuron is in an inactive state. This sparse, event-driven information processing mechanism gives the advantages of high efficiency and low power consumption of the spiking neural network, and is suitable for application deployment on resource-limited hardware devices. At present, pulse neural networks are more and more concerned in voice recognition tasks. Most of the pulse neural network voice models face the computer software platform, and when the training pulse neural network performs the voice recognition task, the high-dimensional voice data is directly used as the network input, and at the same time, in order to obtain better performance, the weight in the network uses the high-precision floating point number.

However, models with high-dimensional inputs and high-precision floating-point weights are not suitable for bit-width-limited hardware devices, and software-end-trained pulse neural network voice models are difficult to deploy on resourceconstrained hardware devices.

SUMMARY OF THE DISCLOSURE

In order to solve the above technical problems in the prior art, the present invention provides a hardware-oriented deep pulse neural network voice recognition method and system, which are applied to the recognition of voice data, and the specific technical solutions thereof are as follows:

A hardware-oriented deep pulse neural network voice recognition method, comprising the following steps:

Step 1: obtaining an open source voice data set, and dividing the open source voice data set into a training data set and a test data set;

Step 2: preprocessing the voice data set, obtaining a low-dimensional voice feature from the high-dimensional voice data, and encoding the low-dimensional voice feature into a pulse sequence;

step 3: constructing a deep pulse neural network model, wherein each neuron in the model adopts a hardware-friendly integrated ignition model;

step 4: constructing a loss function, optimizing the network weight by adopting a space-time anti-transmission algorithm, training the deep pulse neural network model on the training data set, and storing the updated network weight;

Step 5: quantizing the floating point weight into a fixed-point weight, loading the quantized fixed-point weight by the deep pulse neural network model, identifying the test data set to obtain a predicted classification label, and realizing voice recognition of the hardware-oriented deep pulse neural network model.

Further, the step 1 specifically includes: acquiring an audioMNIST open source voice data set, and dividing the audioMNIST open source voice data set into a training set and a test set.

Further, the step 2 specifically includes the following sub-steps:

Step 2.1, pre-processing the voice data, and first performing pre-emphasis, framing, and windowing operations on the voice data; then, performing fast Fourier transform on each frame of short-time analysis window to obtain a corresponding frequency spectrum; then obtaining a Mel frequency spectrum from the obtained frequency spectrum through a Mel filter group; and finally, performing discrete cosine transform on the Mel spectrum logarithm to obtain a Mel frequency cepstrum coefficient as a voice feature;

Step 2.2: Encode the voice feature, set the total simulation time step as T, and at each time step, if the spectrum feature is greater than the random probability generated by the uniform distribution, the time step generates a pulse, the pulse value is 1, otherwise, the pulse value is 0, thereby encoding the real value of the spectrum feature into the pulse sequence represented by the discrete value of 0 and 1.

Further, the step 3 specifically includes the following sub-steps:

Step 3.1: The constructed deep pulse neural network model includes an input layer, an N hidden layer, and an output layer, and a full connection is used between layers. The input layer is configured to receive the encoded pulse sequence; the hidden layer is configured to learn features contained in the input pulse sequence; the output layer is configured to identify a voice category, one neuron represents a type of voice. For each input sample, calculate a pulse issue rate of each neuron in the output layer in the simulation time step, and a category represented by the neuron with the highest pulse issue rate is a predicted tag.

Step 3.2, the neurons in the hidden layer and the output layer in the model both adopt an integrated ignition model, and the film potential of the neuron is calculated according to the following formula:

$$V_i^n(t) = V_i^n(t-1) * (1 - O_i^n(t-1)) + w_{ij}^n * O_j^{n-1}(t) \tag{1}$$

$$O_i^n(t) = \begin{cases} 1, & if \ V_i^n(t) \ge V_{th} \\ 0, & otherwise \end{cases} \tag{2}$$

Wherein, $V_i^n(t)$ is the film potential of the $n^{th}$ layer neuron i at the moment t, $V_i^n(t-1)$ is the film potential of the $n^{th}$ layer neuron i at the moment t - 1, $O_i^n(t-1)$ is the output of the $n^{th}$ layer neuron i at the moment t - 1, $w_{ij}^n$ is the synaptic weight from the $(n-1)^{th}$ layer neuron j to the $n^{th}$ layer neuron i, $O_j^{n-1}(t-1)$ is the output of the n - $1^{th}$ layer of neuron j at the moment t, and $V_{th}$ is the threshold of the neuron.

Further, the step 4 specifically includes the following sub-steps:

Step 4.1: Construct a mean square error loss function Loss($y$, $\check{y}$), The calculation formula is as follows:

$$Loss(y, \hat{y}) = \frac{1}{2}(\hat{y} - y)^2 \tag{3}$$

where y is a label of the training sample,

$\hat{y}$ is a statistical output layer neuron pulse emission rate, $\hat{y} = \frac{\sum_{t=1}^{T} O(t)}{T}$,
T is the total simulation time step.

Step 4.2: Distribute the error through the space-time relationship between the film potentials of the integrated ignition model of each layer to the weight of each layer of neurons by using a space-time inversion algorithm, so as to optimize the network weight. The gradient of the loss to the network weight is:

$$\frac{\partial L}{\partial W^n} = \sum_{t=1}^{T} \frac{\partial L}{\partial V^n(t)} \frac{\partial V^n(t)}{\partial W^n} = \sum_{t=1}^{T} \frac{\partial L}{\partial V^n(t)} O^{n-1}(t) \tag{4}$$

Wherein $\frac{\partial L}{\partial V^n(t)}$ is the derivative of the loss function to the film potential, the calculation may be divided into cases where n is the output layer and where n is the hidden layer, and 1) when n is the output layer:

$$\frac{\partial L}{\partial V^n(t)} = \frac{\partial L}{\partial V^n(t+1)} \frac{\partial V^n(t+1)}{\partial V^n(t)} = \frac{\partial L}{\partial O^n(t+1)} \frac{\partial O^n(t+1)}{\partial V^n(t+1)} \frac{\partial V^n(t+1)}{\partial V^n(t)}$$

$$= \frac{\partial L}{\partial O^n(t+1)} h(V^n(t+1)) (1 - O_i^n(t)) \tag{5}$$

2) When n is the hidden layer:

$$\frac{\partial L}{\partial V^n(t)} = \frac{\partial L}{\partial O^n(t)}\frac{\partial O^n(t)}{\partial V^n(t)} + \frac{\partial L}{\partial O^n(t+1)}\frac{\partial O^n(t+1)}{\partial V^n(t+1)}\frac{\partial V^n(t+1)}{\partial V^n(t)}$$

$$= \frac{\partial L}{\partial O^n(t)}h(V^n(t)) + \frac{\partial L}{\partial O^n(t+1)}h(V^n(t+1))(1 - O_i^n(t)) \qquad (6)$$

where $h(V^n(t))$ is a gradient substitution function of $\frac{\partial O^n(t)}{\partial V^n(t)}$ .

Step 4.3: Train the deep pulse neural network model on the training set, and store the network weight obtained after training.

Further, the step 5 specifically includes the following sub-steps:

Step 5.1: Quantize the floating point weight into a fixed-point weight, which is specifically expressed as follows:

$$\text{quatized\_W} = \text{round}(\text{clip}(W, 0.5^{bit-1} - 1, 1 - 0.5^{bit-1}) * 2^{bit-1} + 0.5)/\, 2^{bit-1} \qquad (7)$$

wherein quatized_W is a quantized fixed-point weight matrix, W is a floating-point weight matrix, and bit is a quantized bit number;

Step 5.2: The deep pulse neural network model loads the quantized fixed-point weight, identifies the encoded test data set to obtain a predicted classification label, and implements voice recognition of the hardware-oriented deep pulse neural network model.

The present invention further comprises a hardware-oriented deep pulse neural network voice recognition system, comprising a data set acquisition module, a data preprocessing and encoding module, a network construction module, a network training storage module, and a quantization test module;

The data set obtaining module is configured to obtain an audioMNIST open source voice data set, and divide a training set and a test set.

The data preprocessing and encoding module is configured to perform feature extraction through the MFCC, obtain a low-dimensional feature from the high-dimensional voice data, and then encode and convert the obtained feature into a pulse sequence.

The network construction module is configured to construct a deep pulse neural network including an input layer, N hidden layers, and an output layer, and a full connection is used between layers. The input layer receives the encoded pulse sequence; the hidden layers learn features contained in the input pulse sequence; and the output layer identifies the voice category. Each neuron in the model is a hardware-friendly integrated ignition model.

The network training storage module is configured to obtain the pulse issuing rate of each neuron of the output layer, construct a mean square error loss function to calculate an error between the output layer pulse issuing rate and the sample label, and allocate the error to the weight of each layer of neurons through the space-time relationship between the layers of integrated ignition model film potentials by using a space-time inversion algorithm to optimize the network weight, and store the trained network weight.

The quantization test module is configured to quantize the trained floating point weight into a fixed-point weight through a quantization operation, load a fixed-point weight, and recognize the test data set to obtain a predicted classification label.

The present disclosure further provides a hardware-oriented deep pulse neural network voice recognition apparatus, including a memory and one or more processors, where the memory stores executable code, and when the one or more processors execute the executable code, the hardware-oriented deep pulse neural network voice recognition method of the present disclosure is implemented.

The present invention further provides a computer-readable storage medium, on which a program is stored, and when the program is executed by a processor, the hardware-oriented deep pulse neural network voice recognition method of the present disclosure is implemented.

Advantages of the Present Invention:

Compared with other existing recognition methods, the hardware-oriented deep pulse neural network voice recognition model of the present invention converts the floating point weight into a low specific point weight, maintains the recognition accuracy similar to the floating point precision weight while reducing the recognition power consumption, and well ensures the deployment of the pulse neural network voice recognition model to the hardware device.

BRIEF DESCRIPTION OF THE DRAWINGS

FIG. 1 is a schematic flowchart of a hardware-oriented deep pulse neural network voice recognition method according to the present invention;

FIG. 2 is a schematic flowchart of a hardware-oriented deep pulse neural network voice recognition method according to the present invention;

FIG. 3 is a schematic diagram of a data preprocessing process according to the present invention;

FIG. 4 is a schematic diagram of a network structure according to the present invention;

FIG. 5 is a frame intention of a hardware-oriented deep pulse neural network voice recognition system of the present invention.

DETAILED DESCRIPTION OF THE EMBODIMENTS

In order to make the objectives, technical solutions, and technical effects of the present invention clearer, the technical solutions in the embodiments of the present invention are clearly and completely described below with reference to the accompanying drawings and embodiments of the specification, and obviously, the described embodiments are a part of the embodiments of the present invention, rather than all of the embodiments.

Compared with an artificial neural network, a spiking neural network is sparse, and an event-driven information processing mechanism gives advantages of high efficiency and low power consumption, and is suitable for application deployment on a resource-limited hardware device. Therefore, the present invention provides a hardware-oriented deep pulse neural network voice recognition method and device

Embodiment 1

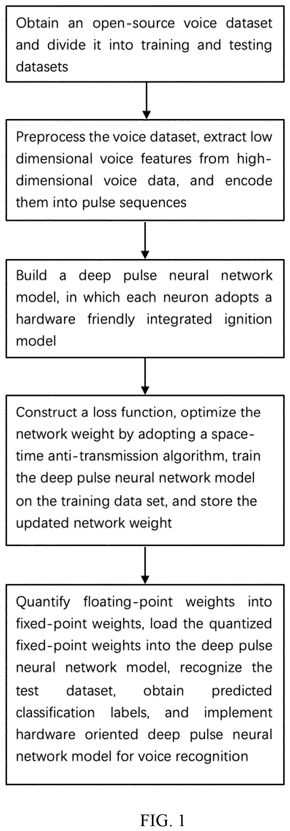

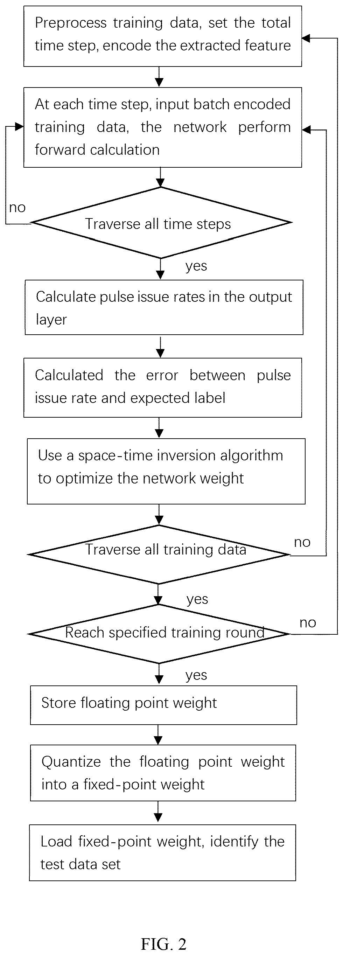

As shown in FIG. 1 and FIG. 2, the hardware-oriented deep pulse neural network voice recognition method of the present invention includes the following steps:

Step 1: obtaining an open source voice data set, and dividing the open source voice data set into a training data set and a test data set;

In this embodiment, the voice data set is an audioMNIST open source voice data set, which is composed of 300000 audio samples, including 10 types of voice numbers from 0 to 9, and the audioMNIST data set is divided into a training set and a test set according to a proportion of 7: 3.

Step 2: preprocessing the voice data set, obtaining a low-dimensional voice feature from the high-dimensional voice data, and encoding the low-dimensional voice feature into a pulse sequence;

Specifically, the following sub-steps are included:

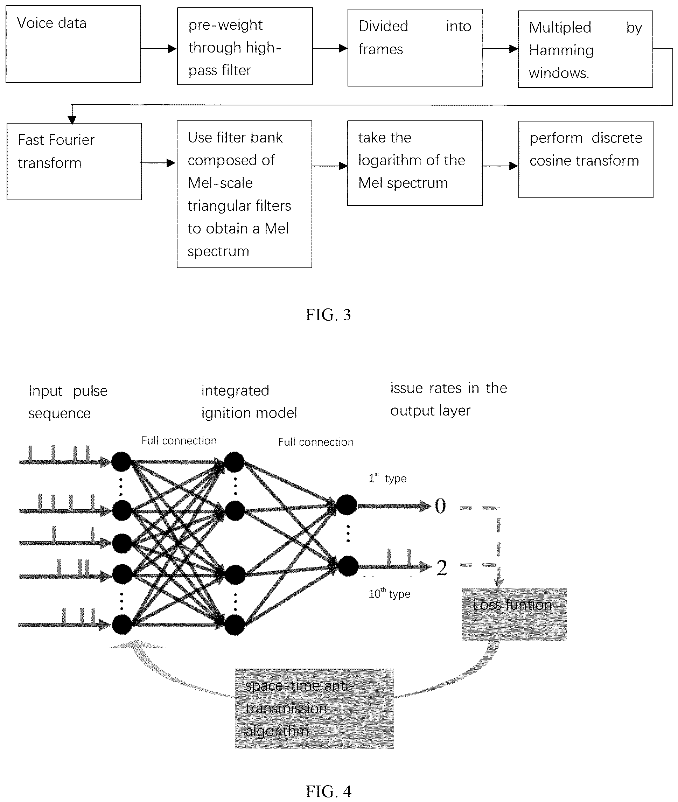

In step 2.1, the voice data is preprocessed, as shown in the process of FIG. 3, in this embodiment, firstly, the voice data is pre-weighted through a high-pass filter, the voice data obtained through high-pass filtering is divided into frames, the length of each frame is 25 ms, the sampling rate is 16000 Hz, one frame has 25 * 16000 = 400 sampling points, each voice sample is divided into 99 frames, windowing operation is performed on each frame, and is multiplied by the Hamming window; then performing fast Fourier transform on each windowed frame to obtain a frequency spectrum corresponding to each frame; filtering the obtained spectrum through a filter bank composed of 26 Mel-scale triangular filters to obtain a Mel spectrum; and finally, taking the logarithm of the Mel spectrum, performing discrete cosine transform on the Mel spectrum logarithm, taking the 1st to 13th coefficients as Mel frequency cepstrum coefficients, and finally, the feature size of each voice sample is 99 * 13, and the feature size of each voice sample is 1287 features;

Step 2.2: The encoding process is specifically: in this embodiment, the total simulation time step T is set to 200, and at each time step, if the total simulation time step T is greater than the random probability generated by the uniform distribution, the time step generates a pulse, the pulse value is 1, otherwise, the pulse value is 0, thereby encoding the real value of the spectrum feature into a pulse sequence represented by 0, 1 discrete value, and the scale of the pulse sequence obtained after 1287 feature encoding is 1287 * 200 .

step 3: constructing a deep pulse neural network model, wherein each neuron in the model adopts a hardware-friendly integrated ignition model;

Specifically, the following sub-steps are included:

Step 3.1: As shown in the schematic diagram of the network structure in FIG. 4, the deep pulse neural network model constructed in this example includes an input layer, the number of neurons in the input layer is 1287, the number of neurons of the input layer is consistent with the number of voice features of a single voice sample, a hidden layer includes 500 neurons, and an output layer includes 10 neurons, and a full connection is used between layers. The input layer is configured to receive the encoded pulse sequence; the hidden layer is configured to learn features contained in the input pulse sequence; and the output layer is configured to identify a voice category, one neuron represents a type of voice. For each input sample, calculate a pulse issue rate of each neuron in the output layer in 200 time steps, and a category represented by the neuron with the highest pulse issue rate is a predicted tag.

Step 3.2, the neurons in the hidden layer and the output layer in the model both adopt an integrated ignition model, and the film potential of the neuron is calculated according to the following formula:

$$V_i^n(\mathrm{t}) = V_i^n(\mathrm{t}-1) * (1 - O_i^n(\mathrm{t}-1)) + w_{ij}^n * O_j^{n-1}(t) \tag{1}$$

$$O_i^n(t) = \begin{cases} 1, & if \ V_i^n(\mathrm{t}) \geq V_{th} \\ 0, & otherwise \end{cases} \tag{2}$$

Wherein, $V_i^n(\mathrm{t})$ is the film potential of the $n^{th}$ layer neuron i at the moment t, $V_i^n(\mathrm{t}-1)$ is the film potential of the $n^{th}$ layer neuron i at the moment t - 1, $O_i^n(\mathrm{t}-1)$ is the output of the $n^{th}$ layer neuron i at the moment t - 1, $w_{ij}^n$ is the synaptic weight from the $(n-1)^{th}$ layer neuron j to the $n^{th}$ layer neuron i, $O_j^{n-1}(\mathrm{t}-1)$ is the output of the n - 1th layer of neuron j at the moment t, and $V_{th}$ is the threshold of the neuron.

In this embodiment, $V_{th}$ = 1

step 4: constructing a loss function, optimizing the network weight by adopting a space-time anti-transmission algorithm, training the deep pulse neural network model on the training data set, and storing the updated network weight;

Specifically, the following sub-steps are included:

Step 4.1: Construct a mean square error loss function
Loss($y$, $\hat{y}$)
The calculation formula is as follows:

$$\mathrm{Loss}(\mathrm{y}, \hat{y}) = \frac{1}{2}(\hat{y} - \mathrm{y})^2 \tag{3}$$

where y is a label of the training sample,
$\hat{y}$

is a statistical output layer neuron pulse emission rate, $\hat{y} = \frac{\sum_{t=1}^{T} O(t)}{T}$
T is the total simulation time step, and in this embodiment, the value is 200

Step 4.2: Distribute the error through the space-time relationship between the film potentials of the integrated ignition model of each layer to the weight of each layer of neurons by using a space-time inversion algorithm, so as to optimize the network weight. The gradient of the loss to the network weight is:

$$\frac{\partial L}{\partial W^n} = \sum_{t=1}^{T} \frac{\partial L}{\partial V^n(t)} \frac{\partial V^n(t)}{\partial W^n} = \sum_{t=1}^{T} \frac{\partial L}{\partial V^n(t)} O^{n-1}(t) \tag{4}$$

Wherein $\frac{\partial L}{\partial V^n(t)}$ is the derivative of the loss function to the film potential, the calculation may be divided into cases where n is the output layer and where n is the hidden layer, and 1) when n is the output layer:

$$\frac{\partial L}{\partial V^n(t)} = \frac{\partial L}{\partial V^n(t+1)}\frac{\partial V^n(t+1)}{\partial V^n(t)} = \frac{\partial L}{\partial O^n(t+1)}\frac{\partial O^n(t+1)}{\partial V^n(t+1)}\frac{\partial V^n(t+1)}{\partial V^n(t)}$$

$$= \frac{\partial L}{\partial O^n(t+1)} h(V^n(t+1))\,(1 - O_i^n(t)) \qquad (5)$$

2) When n is the hidden layer:

$$\frac{\partial L}{\partial V^n(t)} = \frac{\partial L}{\partial O^n(t)}\frac{\partial O^n(t)}{\partial V^n(t)} + \frac{\partial L}{\partial O^n(t+1)}\frac{\partial O^n(t+1)}{\partial V^n(t+1)}\frac{\partial V^n(t+1)}{\partial V^n(t)}$$

$$= \frac{\partial L}{\partial O^n(t)} h(V^n(t)) + \frac{\partial L}{\partial O^n(t+1)} h(V^n(t+1))\,(1 - O_i^n(t)) \qquad (6)$$

where $h(V^n(t))$ is a gradient substitution function of $\frac{\partial O^n(t)}{\partial V^n(t)}$.

In the present embodiment, the gradient substitution function h ($V^n$ (t)) uses a rectangular function, i.e. $h(V^n(t))$ = sign ($|V^n$ (t) - $V_{th}|$< 1).

Step 4.3: Train the deep pulse neural network model on the training set, and in this embodiment, set the batch size to 20 for each batch, at each time step, load the pulse data obtained after encoding at this moment, the size is 20 * 1287, after 200 time steps, the pulse issuing rate of each neuron in the batch output layer is calculated, and the category represented by the neuron with the highest pulse issuing rate is the predicted label. The loss is calculated according to the predicted label and the actual label, the gradient of the loss to the weight is calculated by using a space-time anti-transmission algorithm, the network weight is optimized by using an Adam gradient descent algorithm, and the learning rate is set to 0.001. After 30 rounds of training, the network weight obtained after training is stored.

Step 5: quantizing the floating point weight into a fixed-point weight, loading the quantized fixed-point weight by the deep pulse neural network model, identifying the test data set to obtain a predicted classification label, and realizing voice recognition of the hardware-oriented deep pulse neural network model.

Specifically, the following sub-steps are included:

Step 5.1: Quantize the floating point weight into a fixed-point weight, which is specifically expressed as follows:

$$\text{quatized\_W} = \text{round}(\text{clip}(W, 0.5^{bit-1} - 1, 1 - 0.5^{bit-1}) * 2^{bit-1} + 0.5) / 2^{bit-1} \qquad (7)$$

The quatiaed_W is a quantized fixed-point weight matrix, W is a floating-point weight matrix, and bit is a quantized bit number.

In this embodiment, bit = 8

Step 5.2: The deep pulse neural network model loads the quantized fixed-point weight, and for each sample of the test data set, at each time step, the pulse data obtained by encoding at the moment is loaded, the size is 1 * 1287, after 200 time steps, the pulse distribution rate of each neuron of the sample output layer is calculated, and the category represented by the neuron with the highest pulse issuing rate is the predicted label. The number of correctly predicted samples is counted, the recognition accuracy is calculated, and the recognition accuracy of the 32-bit floating point weight and the 8-bit fixed-point weight on the audioMNIST voice test set is given in Table 1.

| 仿真时间步<br>Simulation time step | 数据集<br>Dataset | 32 位浮点权值<br>32 - bit floating point weight | 8bit 定点权值<br>8 bit fixed-point weight |
|---|---|---|---|
| 200 | audioMNIST | 98.78% | 98.74% |

It can be seen from the table that compared with the pulse neural network model of the 32 floating point weight, the hardware-oriented deep pulse neural network voice recognition method provided by the present invention reduces the weight precision while the recognition accuracy is basically not damaged, which can well ensure the deployment of the pulse neural network voice model trained by the software terminal on the resource-limited hardware device.

Embodiment 2

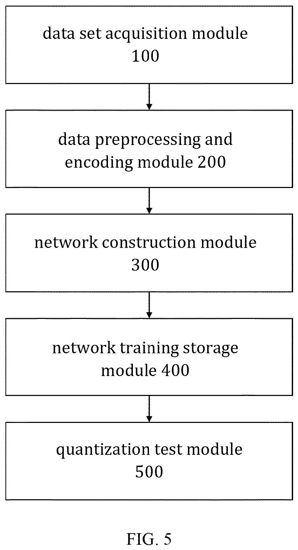

As shown in FIG. 5, a hardware-oriented deep pulse neural network voice recognition system of the present invention comprises a data set acquisition module 100, a data preprocessing and encoding module 200, a network construction module 300, a network training storage module 400, and a quantization test module 500;
The data set acquisition module 100 is configured to obtain an audioMNIST open source voice data set, and divide a training set and a test set.

The data preprocessing and encoding module 200 is configured to perform feature extraction on the training set and the test set divided by the data set acquisition module 100 through MFCC, obtain a low-dimensional feature from the high-dimensional voice data, and then encode and convert the obtained feature into a pulse sequence.

The network construction module 300 is configured to construct a deep pulse neural network including an input layer, N hidden layers, and an output layer, and a full connection is used between layers. The input layer accepts the pulse sequence encoded by the data preprocessing and encoding module 200; the hidden layers learn features contained in the input pulse sequence; and the output layer identifies the voice category. Each neuron in the model is a hardware-friendly integrated ignition model.

The network training storage module 400 is configured to obtain the pulse distribution rate of each neuron at the output layer of the network construction module 300, construct a mean square error loss function to calculate an error between the output layer pulse distribution rate and the sample label, and allocate the error to the weight of each layer of neurons through the space-time relationship between the layers of integrated ignition model film potentials by using a space-time inversion algorithm to optimize the network weight, and store the trained network weight.

The quantization test module 500 is configured to quantize the floating point weight stored by the network training storage module 400 into a fixed-point weight through a quantization operation, and recognize the test data set to obtain a predicted classification label.

Specifically, each module of the hardware-oriented deep pulse neural network voice recognition system of the present disclosure specifically includes:

the data set obtaining module is configured to obtain an audioMNIST open source voice data set, and divide a training set and a test set;

The data preprocessing and encoding module is configured to perform feature extraction through the MFCC, obtain a low-dimensional feature from the high-dimensional voice data, and then encode and convert the obtained feature into a pulse sequence; Specifically, first, pre-emphasis, framing, and windowing operations are performed on the voice data; then, for each frame of short-time analysis window, obtaining a corresponding spectrum by means of fast Fourier transform; then obtaining a Mel spectrum by means of a Mel filter group; and finally, performing discrete cosine transform on the Mel spectrum logarithm to obtain a Mel frequency cepstrum coefficient as a voice feature, encoding the voice feature, setting a total simulation time step as T, and at each time step, if the spectrum feature is greater than a random probability generated by a uniform distribution, the time step generates a pulse, the pulse value is 1, otherwise the pulse value is 0, the real value of the spectral feature is encoded as a sequence of pulses represented by a discrete value of 0, 1;

The network construction module is configured to include an input layer, N hidden layers, and a deep pulse neural network of an output layer, and a full connection is used between layers; the hidden layer is used for learning features contained in the input pulse sequence; the output layer is used for recognizing a voice category, one neuron represents one type of voice, and for each input sample, the pulse issuing rate of each neuron of the output layer in the simulation time step is calculated, and the category represented by the neuron with the highest pulse issuing rate is the predicted label; neurons in the hidden layer and the output layer in the model both adopt an integrated ignition model, and the film potential of the neuron is calculated according to the following formula:

$$V_i^n(\mathrm{t}) = V_i^n(\mathrm{t}-1) * (1 - O_i^n(\mathrm{t}-1)) + w_{ij}^n * O_j^{n-1}(t) \qquad (1)$$

$$O_i^n(t) = \begin{cases} 1, & if \ V_i^n(\mathrm{t}) \geq V_{th} \\ 0, & otherwise \end{cases} \qquad (2)$$

Wherein, $V_i^n(\text{t})$

is the film potential of the n$^{\text{th}}$ layer neuron i at the moment t, $V_i^n(\text{t}-1)$

is the film potential of the n$^{\text{th}}$ layer neuron i at the moment t - 1, $O_i^n(\text{t}-1)$

is the output of the n$^{\text{th}}$ layer neuron i at the moment t - 1,

$w_{ij}^n$ is the synaptic weight from the (n - 1)$^{\text{th}}$ layer neuron j to the n$^{\text{th}}$ layer neuron i, $O_j^{n-1}(\text{t}-1)$ is the output of the (n - 1) th layer of neuron j at the moment t, and V$_{\text{th}}$ is the threshold of the neuron;

The network training storage module is configured to obtain the pulse distribution rate of each neuron of the output layer in the simulation time step, construct a mean square error loss function to calculate an error between the output layer distribution rate and the sample label, and allocate the error to the weight of each layer of neurons through the space-time relationship between the layers of integrated ignition model film potentials by using a space-time inversion algorithm to optimize the network weight, and store the trained network weight, specifically:

Construct Mean Square Error Loss Function Loss(y, ŷ)
The formula is as follows:

$$\text{Loss}(\text{y}, \hat{y}) = \frac{1}{2}(\hat{y} - \text{y})^2 \tag{3}$$

where y is a label of the training sample,

ŷ is a statistical output layer neuron pulse emission rate, $\hat{y} = \frac{\sum_{t=1}^{T} O(t)}{T}$ , T is the total simulation time step; the error is distributed to the weight of each layer of neurons through the space-time relationship between the film potentials of the integrated ignition model of each layer by using a space-time anti-transmission algorithm to optimize the network weight; the gradient of the loss on the network weight is:

$$\frac{\partial L}{\partial W^n} = \sum_{t=1}^{T} \frac{\partial L}{\partial V^n(t)} \frac{\partial V^n(t)}{\partial W^n} = \sum_{t=1}^{T} \frac{\partial L}{\partial V^n(t)} O^{n-1}(t) \tag{4}$$

Wherein $\frac{\partial L}{\partial V^n(t)}$ is the derivative of the loss function to the film potential, the calculation may be divided into cases where n is the output layer and where n is the hidden layer, and 1) when n is the output layer:

$$\frac{\partial L}{\partial V^n(t)} = \frac{\partial L}{\partial V^n(t+1)} \frac{\partial V^n(t+1)}{\partial V^n(t)} = \frac{\partial L}{\partial O^n(t+1)} \frac{\partial O^n(t+1)}{\partial V^n(t+1)} \frac{\partial V^n(t+1)}{\partial V^n(t)}$$

$$= \frac{\partial L}{\partial O^n(t+1)} h(V^n(t+1)) (1 - O_i^n(\text{t})) \tag{5}$$

2) When n is the hidden layer:

$$\frac{\partial L}{\partial V^n(t)} = \frac{\partial L}{\partial O^n(t)} \frac{\partial O^n(t)}{\partial V^n(t)} + \frac{\partial L}{\partial O^n(t+1)} \frac{\partial O^n(t+1)}{\partial V^n(t+1)} \frac{\partial V^n(t+1)}{\partial V^n(t)}$$

$$= \frac{\partial L}{\partial O^n(t)} h(V^n(t)) + \frac{\partial L}{\partial O^n(t+1)} h(V^n(t+1)) (1 - O_i^n(\text{t})) \tag{6}$$

where $h(V^n(t))$ is the gradient substitution function of $\dfrac{\partial o^n(t)}{\partial V^n(t)}$ ;

Training the deep pulse neural network model on the training set, and storing a network weight obtained after training;

The quantization test module is configured to quantize the trained floating point weight into a fixed-point weight through a quantization operation, load a fixed-point weight, and recognize the test data set to obtain a predicted classification label.

Embodiment 3

This embodiment provides a hardware-oriented deep pulse neural network voice recognition apparatus, including a memory and one or more processors, where the memory stores executable code, and when the one or more processors execute the executable code, the hardware-oriented deep pulse neural network voice recognition method for implementing Embodiment 1 is implemented.

This embodiment further provides a computer-readable storage medium, on which a program is stored, and when the program is executed by a processor, the hardware-oriented deep pulse neural network voice recognition method according to Embodiment 1 is implemented.

It should also be noted that the terms "comprising," " including, "or any other variation thereof are intended to cover a non-exclusive inclusion, so that a process, method, commodity, or device that includes a series of elements includes not only those elements, but also other elements that are not explicitly listed, or elements inherent to such a process, method, commodity, or device. In the absence of more restrictions, the sentence" includes one. There are no additional identical elements in the process, method, article, or device that includes the element.

A person skilled in the art should understand that the embodiments of the present disclosure may be provided as a method, a system, or a computer program product. Accordingly, the present invention may take the form of an entirely hardware embodiment, an entirely software embodiment or an embodiment combining software and hardware aspects. Moreover, the present disclosure may use a form of a computer program product implemented on one or more computer-usable storage media (including but not limited to a disk memory, a CD-ROM, an optical memory, and the like) including computer-usable program codes.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are connected through a communications network. In a distributed computing environment, program modules may be located in both local and remote computer storage media including storage devices.

The embodiments of the present invention are all described in a progressive manner, and the same or similar parts between the embodiments may refer to each other, and each embodiment focuses on differences from other embodiments. In particular, for the system embodiment, since it is basically similar to the method embodiment, the description is relatively simple, and for the relevant parts, reference may be made to the description of the method embodiment.

The foregoing descriptions are merely embodiments of the present invention, and are not intended to limit the present invention. For those skilled in the art, the present disclosure may have various modifications and changes. Any modifications, equivalent replacements, improvements and the like made within the spirit and principle of the present disclosure shall fall within the scope of the claims of the present disclosure.

**Claims**

1. A hardware-oriented deep pulse neural network voice recognition method, comprising the following steps:

Step 1: obtaining an open source voice data set, and dividing the open source voice data set into a training data set and a test data set;

Step 2: preprocessing the voice data set, obtaining a low-dimensional voice feature from the high-dimensional voice data, and encoding the low-dimensional voice feature into a pulse sequence;

step 3: constructing a deep pulse neural network model, wherein each neuron in the model adopts a hardware-friendly integrated ignition model;

step 4: constructing a loss function, optimizing the network weight by adopting a space-time anti-transmission algorithm, training the deep pulse neural network model on the training data set, and storing the updated network weight;

Step 5: quantizing the floating point weight into a fixed-point weight, loading the quantized fixed-point weight by the deep pulse neural network model, identifying the test data set to obtain a predicted classification label, and realizing voice recognition of the hardware-oriented deep pulse neural network model.

2. The hardware-oriented deep pulse neural network voice recognition method according to claim 1, wherein the step 1 specifically comprises: acquiring an audioMNIST open source voice data set, and dividing a training set and a test set.

3. The hardware-oriented deep pulse neural network voice recognition method according to claim 1, wherein step 2 specifically comprises:

Step 2.1, pre-processing the voice data, and first performing pre-emphasis, framing, and windowing operations on the voice data; then, performing fast Fourier transform on each frame of short-time analysis window to obtain a corresponding frequency spectrum; then obtaining a Mel frequency spectrum from the obtained frequency spectrum through a Mel filter group; and finally, performing discrete cosine transform on the Mel spectrum logarithm to obtain a Mel frequency cepstrum coefficient as a voice feature;

Step 2.2: Encode the voice feature, set the total simulation time step as T, and at each time step, if the spectrum feature is greater than the random probability generated by the uniform distribution, the time step generates a pulse, the pulse value is 1, otherwise, the pulse value is 0, thereby encoding the real value of the spectrum feature into the pulse sequence represented by the discrete value of 0 and 1.

4. The hardware-oriented deep pulse neural network voice recognition method according to claim 1, wherein step 3 specifically comprises:

Step 3.1: The constructed deep pulse neural network model includes an input layer, N hidden layers, and an output layer, and a full connection is used between layers. The input layer is configured to receive the encoded pulse sequence; the hidden layer is configured to learn features contained in the input pulse sequence; the output layer is configured to identify a voice category, one neuron represents a type of voice, for each input sample, calculate a pulse issue rate of each neuron in the output layer in the simulation time step, and a category represented by the neuron with the highest pulse issue rate is a predicted tag;

Step 3.2, the neurons in the hidden layer and the output layer in the model both adopt an integrated ignition model, and the film potential of the neuron is calculated according to the following formula:

$$V_i^n(t) = V_i^n(t-1) * (1 - O_i^n(t-1)) + w_{ij}^n * O_j^{n-1}(t) \qquad (1)$$

$$O_i^n(t) = \begin{cases} 1, & if \ V_i^n(t) \geq V_{th} \\ 0, & otherwise \end{cases} \qquad (2)$$

Wherein,

$V_i^n(t)$ is the film potential of the $n^{th}$ layer neuron i at the moment t,

$V_i^n(t-1)$ is the film potential of the $n^{th}$ layer neuron i at the moment t - 1,

$O_i^n(t-1)$ is the output of the $n^{th}$ layer neuron i at the time t - 1,

$w_{ij}^n$ is the synaptic weight from the $(n - 1)^{th}$ layer neuron j to the $n^{th}$ layer neuron i,

$O_j^{n-1}(t-1)$ is the output of the n - 1th layer of neuron j at the moment t, and $V_{th}$ is the threshold of the neuron.

5. The hardware-oriented deep pulse neural network voice recognition method according to claim 1, wherein step 4 specifically comprises:

Step 4.1: Construct a mean square error loss function Loss(y, ŷ),

The calculation formula is as follows:

$$\mathrm{Loss}(y, \hat{y}) = \frac{1}{2}(\hat{y} - y)^2 \qquad (3)$$

where y is a label of the training sample,

$\hat{y}$ is a statistical output layer neuron pulse emission rate, $\hat{y} = \frac{\sum_{t=1}^{T} O(t)}{T}$,
T is the total simulation time step;

Step 4.2: allocating the error through the space-time relationship between the film potentials of the integrated ignition model of each layer to the weight of each layer of neurons by using a space-time inversion algorithm to optimize the network weight, wherein the gradient of the loss on the network weight is:

$$\frac{\partial L}{\partial W^n} = \sum_{t=1}^{T} \frac{\partial L}{\partial V^n(t)} \frac{\partial V^n(t)}{\partial W^n} = \sum_{t=1}^{T} \frac{\partial L}{\partial V^n(t)} O^{n-1}(t) \qquad (4)$$

Wherein $\frac{\partial L}{\partial V^n(t)}$ is the derivative of the loss function to the film potential, the calculation may be divided into cases where n is the output layer and where n is the hidden layer, and 1) when n is the output layer:

$$\frac{\partial L}{\partial V^n(t)} = \frac{\partial L}{\partial V^n(t+1)} \frac{\partial V^n(t+1)}{\partial V^n(t)} = \frac{\partial L}{\partial O^n(t+1)} \frac{\partial O^n(t+1)}{\partial V^n(t+1)} \frac{\partial V^n(t+1)}{\partial V^n(t)}$$

$$= \frac{\partial L}{\partial O^n(t+1)} h(V^n(t+1)) (1 - O_i^n(t)) \qquad (5)$$

2 When n is the hidden layer:

$$\frac{\partial L}{\partial V^n(t)} = \frac{\partial L}{\partial O^n(t)} \frac{\partial O^n(t)}{\partial V^n(t)} + \frac{\partial L}{\partial O^n(t+1)} \frac{\partial O^n(t+1)}{\partial V^n(t+1)} \frac{\partial V^n(t+1)}{\partial V^n(t)}$$

$$= \frac{\partial L}{\partial O^n(t)} h(V^n(t)) + \frac{\partial L}{\partial O^n(t+1)} h(V^n(t+1)) (1 - O_i^n(t)) \qquad (6)$$

where $h$(V$^n$ (t)) is the gradient substitution function of $\frac{\partial O^n(t)}{\partial V^n(t)}$ ;
Step 4.3: Train the deep pulse neural network model on the training set, and store the network weight obtained after training.

6. The hardware-oriented deep pulse neural network voice recognition method according to claim 1, wherein step 5 specifically comprises:

Step 5.1: Quantize the floating point weight into a fixed-point weight, which is specifically expressed as follows:

$$\mathrm{quatized\_W} = \mathrm{round}(\mathrm{clip}(W, 0.5^{bit-1} - 1, 1 - 0.5^{bit-1}) * 2^{bit-1} + 0.5) / 2^{bit-1} \qquad (7)$$

wherein quatized_W is a quantized fixed-point weight matrix, W is a floating-point weight matrix, and bit is a quantized bit number;
Step 5.2: The deep pulse neural network model loads the quantized fixed-point weight, identifies the encoded test data set to obtain a predicted classification label, and
implements voice recognition of the hardware-oriented deep pulse neural network model.

7. A hardware-oriented deep pulse neural network voice recognition system, comprising: a data set acquisition module, a data preprocessing and encoding module, a network construction module, a network training storage module, and a quantization test module;

the data set obtaining module is configured to obtain an audioMNIST open source voice data set, and divide a training set and a test set;

The data preprocessing and encoding module is configured to perform feature extraction through the MFCC, obtain a low-dimensional feature from the high-dimensional voice data, and then encode and convert the obtained feature into a pulse sequence;

Specifically, first, pre-emphasis, framing, and windowing operations are performed on the voice data; then, for each frame of short-time analysis window, obtaining a corresponding spectrum by means of fast Fourier transform; then obtaining a Mel spectrum by means of a Mel filter group; and finally, performing discrete cosine transform on the Mel spectrum logarithm to obtain a Mel frequency cepstrum coefficient as a voice feature, encoding the voice feature, setting a total simulation time step as T, and at each time step, if the spectrum feature is greater than a random probability generated by a uniform distribution, the time step generates a pulse, the pulse value is 1, otherwise the pulse value is 0, the real value of the spectral feature is encoded as a sequence of pulses represented by a discrete value of 0, 1;

The network construction module is configured to include an input layer, N hidden layers, and a deep pulse neural network of an output layer, and a full connection is used between layers; the hidden layer is used for learning features contained in the input pulse sequence; the output layer is used for recognizing a voice category, one neuron represents one type of voice, and for each input sample, the pulse issuing rate of each neuron of the output layer in the simulation time step is calculated, and the category represented by the neuron with the highest pulse issuing rate is the predicted label; neurons in the hidden layer and the output layer in the model both adopt an integrated ignition model, and the film potential of the neuron is calculated according to the following formula:

$$V_i^n(t) = V_i^n(t-1) * (1 - O_i^n(t-1)) + w_{ij}^n * O_j^{n-1}(t) \qquad (1)$$

$$O_i^n(t) = \begin{cases} 1, & if \ \ V_i^n(t) \geq V_{th} \\ 0, & otherwise \end{cases} \qquad (2)$$

Wherein,

$$V_i^n(t)$$

is the film potential of the n<sup>th</sup> layer neuron i at the moment t,

$$V_i^n(t-1)$$

is the film potential of the n<sup>th</sup> layer neuron i at time t - 1,

$$O_i^n(t-1)$$

is the output of the n<sup>th</sup> layer neuron i at the time t - 1,

$$w_{ij}^n$$

is the synaptic weight from the (n - 1)<sup>th</sup> layer neuron j to the n<sup>th</sup> layer neuron i,

$$O_j^{n-1}(t-1)$$

is the output of the (n - 1) th layer of neuron j at the moment t, and $V_{th}$ is the threshold of the neuron;

The network training storage module is configured to obtain the pulse distribution rate of each neuron of the output layer in the simulation time step, construct a mean square error loss function to calculate an error between the output layer distribution rate and the sample label, and allocate the error to the weight of each layer of neurons through the space-time relationship between the layers of integrated ignition model film potentials by using a space-time inversion algorithm to optimize the network weight, and store the trained network weight, specifically:

Construct Mean Square Error Loss Function Loss(y, ŷ), the formula is as follows:

$$\text{Loss}(y, \hat{y}) = \frac{1}{2}(\hat{y} - y)^2 \tag{3}$$

where y is a label of the training sample, $\hat{y}$ is a statistical output layer neuron pulse emission rate, $\hat{y} = \frac{\sum_{t=1}^{T} O(t)}{T}$ , T is the total simulation time step;

the error is distributed to the weight of each layer of neurons through the space-time relationship between the film potentials of the integrated ignition model of each layer by using a space-time anti-transmission algorithm to optimize the network weight; the gradient of the loss on the network weight is:

$$\frac{\partial L}{\partial W^n} = \sum_{t=1}^{T} \frac{\partial L}{\partial V^n(t)} \frac{\partial V^n(t)}{\partial W^n} = \sum_{t=1}^{T} \frac{\partial L}{\partial V^n(t)} O^{n-1}(t) \tag{4}$$

Wherein $\frac{\partial L}{\partial V^n(t)}$ is the derivative of the loss function to the film potential, the calculation may be divided into cases where n is the output layer and where n is the hidden layer, and 1) when n is the output layer:

$$\frac{\partial L}{\partial V^n(t)} = \frac{\partial L}{\partial V^n(t+1)} \frac{\partial V^n(t+1)}{\partial V^n(t)} = \frac{\partial L}{\partial O^n(t+1)} \frac{\partial O^n(t+1)}{\partial V^n(t+1)} \frac{\partial V^n(t+1)}{\partial V^n(t)}$$

$$= \frac{\partial L}{\partial O^n(t+1)} h(V^n(t+1)) (1 - O_i^n(t)) \tag{5}$$

2 When n is the hidden layer:

$$\frac{\partial L}{\partial V^n(t)} = \frac{\partial L}{\partial O^n(t)} \frac{\partial O^n(t)}{\partial V^n(t)} + \frac{\partial L}{\partial O^n(t+1)} \frac{\partial O^n(t+1)}{\partial V^n(t+1)} \frac{\partial V^n(t+1)}{\partial V^n(t)}$$

$$= \frac{\partial L}{\partial O^n(t)} h(V^n(t)) + \frac{\partial L}{\partial O^n(t+1)} h(V^n(t+1)) (1 - O_i^n(t)) \tag{6}$$

where h ($V^n$ (t)) is the gradient substitution function of $\frac{\partial O^n(t)}{\partial V^n(t)}$ ;
training the deep pulse neural network model on the training set, and storing a network weight obtained after training;
The quantization test module is configured to quantize the trained floating point weight into a fixed-point weight through a quantization operation, load a fixed-point weight, and recognize the test data set to obtain a predicted classification label.

8. The hardware-oriented deep pulse neural network voice recognition system according to claim 1, wherein:

   The quantization operation is specifically as follows:

   $$\text{quatized\_W} = \text{round}(\text{clip}(W, 0.5^{bit-1} - 1, 1 - 0.5^{bit-1}) * 2^{bit-1} + 0.5) / 2^{bit-1} \tag{7}$$

   The quatized_W is a quantized fixed-point weight matrix, W is a floating-point weight matrix, and Bit is a quantized bit number.

9. A hardware-oriented deep pulse neural network voice recognition apparatus, comprising a memory and one or more processors, wherein the memory stores executable code, and when the one or more processors execute the executable code, the hardware-oriented deep pulse neural network voice recognition method according to any one of claims 1-6 is implemented.

10. The computer-readable storage medium is **characterized in that** a program is stored thereon, and when the program is executed by a processor, the hardware-oriented deep pulse neural network voice recognition method according to any one of claims 1-6 is implemented.

Obtain an open-source voice dataset and divide it into training and testing datasets

↓

Preprocess the voice dataset, extract low dimensional voice features from high-dimensional voice data, and encode them into pulse sequences

↓

Build a deep pulse neural network model, in which each neuron adopts a hardware friendly integrated ignition model

↓

Construct a loss function, optimize the network weight by adopting a space-time anti-transmission algorithm, train the deep pulse neural network model on the training data set, and store the updated network weight

↓

Quantify floating-point weights into fixed-point weights, load the quantized fixed-point weights into the deep pulse neural network model, recognize the test dataset, obtain predicted classification labels, and implement hardware oriented deep pulse neural network model for voice recognition

FIG. 1

Preprocess training data, set the total time step, encode the extracted feature

At each time step, input batch encoded training data, the network perform forward calculation

Traverse all time steps — no

yes

Calculate pulse issue rates in the output layer

Calculated the error between pulse issue rate and expected label

Use a space-time inversion algorithm to optimize the network weight

Traverse all training data — no

yes

Reach specified training round — no

yes

Store floating point weight

Quantize the floating point weight into a fixed-point weight

Load fixed-point weight, identify the test data set

FIG. 2

| | | | |
|---|---|---|---|
| Voice data | pre-weight through high-pass filter | Divided into frames | Multipled by Hamming windows. |

| | | | |
|---|---|---|---|
| Fast Fourier transform | Use filter bank composed of Mel-scale triangular filters to obtain a Mel spectrum | take the logarithm of the Mel spectrum | perform discrete cosine transform |

FIG. 3

Input pulse sequence

integrated ignition model

issue rates in the output layer

Full connection

Full connection

1st type

0

2

10th type

Loss funtion

space-time anti-transmission algorithm

FIG. 4

```
┌─────────────────────────────────┐
│   data set acquisition module   │
│               100               │
└─────────────────────────────────┘
                 │
                 ▼
┌─────────────────────────────────┐
│      data preprocessing and     │
│       encoding module 200       │
└─────────────────────────────────┘
                 │
                 ▼
┌─────────────────────────────────┐
│   network construction module   │
│               300               │
└─────────────────────────────────┘
                 │
                 ▼
┌─────────────────────────────────┐
│     network training storage    │
│            module 400           │
└─────────────────────────────────┘
                 │
                 ▼
┌─────────────────────────────────┐
│     quantization test module    │
│               500               │
└─────────────────────────────────┘
```

FIG. 5

## INTERNATIONAL SEARCH REPORT

| International application No. |
| --- |
| **PCT/CN2023/118244** |

**A. CLASSIFICATION OF SUBJECT MATTER**

G10L15/06(2013.01)i

According to International Patent Classification (IPC) or to both national classification and IPC

**B. FIELDS SEARCHED**

Minimum documentation searched (classification system followed by classification symbols)

IPC: G10L

Documentation searched other than minimum documentation to the extent that such documents are included in the fields searched

Electronic data base consulted during the international search (name of data base and, where practicable, search terms used)

CNABS, CNTXT, CNKI: 脉冲神经网络, 尖峰神经网络, 类脑神经网络, 集成, 点火, 反传, 反向传播, 权值, 权重, 语音, 识别; VEN, USTXT, WOTXT, ENTXT, ELSEVIER, IEEE: SNN, Spiking Neural Network, integrate, fire, STBP, back propagation, weight, speech, voice, recognition

**C. DOCUMENTS CONSIDERED TO BE RELEVANT**

| Category* | Citation of document, with indication, where appropriate, of the relevant passages | Relevant to claim No. |
| --- | --- | --- |
| PX | CN 116259310 A (ZHEJIANG LAB et al.) 13 June 2023 (2023-06-13) claims 1-10 | 1-10 |
| X | CN 111724796 A (ZHEJIANG LAB et al.) 29 September 2020 (2020-09-29) description, paragraphs 54-167, and figures 1-7 | 1-4, 6, 9-10 |
| X | CN 114332545 A (ZHEJIANG LAB) 12 April 2022 (2022-04-12) description, paragraphs 15-35, and figures 1-4 | 1-4, 6, 9-10 |
| A | CN 113838459 A (ZHEJIANG LAB et al.) 24 December 2021 (2021-12-24) entire document | 1-10 |
| A | CN 114155478 A (SUZHOU INSPUR INTELLIGENT TECHNOLOGY CO., LTD.) 08 March 2022 (2022-03-08) entire document | 1-10 |
| A | CN 114821096 A (HUAWEI TECHNOLOGIES CO., LTD.) 29 July 2022 (2022-07-29) entire document | 1-10 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 November 2023** | **23 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/118244**

**C.  DOCUMENTS CONSIDERED TO BE RELEVANT**

| Category* | Citation of document, with indication, where appropriate, of the relevant passages | Relevant to claim No. |
|---|---|---|
| A | KR 20220071091 A (CHUNGBUK NATIONAL UNIVERSITY INDUSTRY-ACADEMIC COOPERATION FOUNDATION) 31 May 2022 (2022-05-31) entire document | 1-10 |

Form PCT/ISA/210 (second sheet) (July 2022)

<div align="center">

**INTERNATIONAL SEARCH REPORT**
**Information on patent family members**

</div>

| | International application No. |
|---|---|
| | **PCT/CN2023/118244** |

| Patent document cited in search report | | | Publication date (day/month/year) | Patent family member(s) | | | Publication date (day/month/year) |
|---|---|---|---|---|---|---|---|
| CN | 116259310 | A | 13 June 2023 | None | | | |
| CN | 111724796 | A | 29 September 2020 | CN | 111724796 | B | 13 January 2023 |
| CN | 114332545 | A | 12 April 2022 | CN | 114332545 | B | 05 August 2022 |
| CN | 113838459 | A | 24 December 2021 | None | | | |
| CN | 114155478 | A | 08 March 2022 | CN | 114155478 | B | 10 May 2022 |
| CN | 114821096 | A | 29 July 2022 | None | | | |
| KR | 20220071091 | A | 31 May 2022 | None | | | |

Form PCT/ISA/210 (patent family annex) (July 2022)